# EUROPEAN PATENT SPECIFICATION

(11) **EP 3 001 523 B1**
(45) Date of publication and mention of the grant of the patent: **14.11.2018**
(21) Application number: 14186132.8
(22) Date of filing: 24.09.2014
(51) Int. Cl.: H02G 15/184, H02G 15/113, H01R 4/36, H01R 4/70, H01R 13/447, H01R 13/52

(54) **Electrical connector for end-to-end connection**
Elektrischer Verbinder für eine Ende-zu-Ende-Verbindung
Connecteur électrique pour connexion de bout en bout

(43) Date of publication of application: 30.03.2016
(73) Proprietor: Tyco Electronics Raychem GmbH, 85521 Ottobrunn (DE)
(72) Inventor: Jaroschek, Jens, 83661 Lenggries (DE)
(74) Representative: Grünecker Patent- und Rechtsanwälte PartG mbB

(56) References cited:
- DE-A1- 3 142 191
- GB-A- 2 294 597
- JP-U- S52 101 994
- US-A- 3 816 640
- US-A1- 2013 056 268

## Description

The present invention relates to an electrical connector for end-to-end connection of electrical conductors. Electrical cable connectors are used frequently in the electrical fields, and in particular, in the field of high voltage energy transmission, for electrically connecting or terminating length of cables. For an end-to-end connection it is known, for instance from US 5,201,914 to mechanically and electrically connect two ends of cables by means of a tubular electrically conductive sleeve together with screws that fix the cable within the sleeve.

Furthermore, it is known for straight joints connecting polymeric insulating cables to cover the electric connection of the joint with electrically insulating elastic sleeves that also provide an electrical stress control and a Faraday cage like screening. One possibility to mount such an elastic covering sleeve over the connector area is to pre-expand a silicone rubber body by means of a spiral hold-out system. By destroying the spiral, the pre-expanded silicone material returns into a shrunk position, where it is in direct mechanical contact with the cable and the cable connector. Alternatively, also a heat shrinkable material can be used as a hold-out as this is described in WO 2014/095563 A1. Finally, an elastic sleeve can also be assembled by sliding same in a longitudinal direction over the connector and using lubricating grease, for instance silicone grease, for reducing the friction sufficiently for the assembly. This latter assembly method has the advantage that it neither uses an additional spiral, which causes a lot of waste, nor needs the presence of a heat source. However, for successfully mounting the sleeve over the electrical connector in a slide-on technique, it is essential that the electrical connector presents an absolutely smooth outer surface to the inner surface of the elastic sleeve. Even small openings might lead to an interruption of the grease film and therefore disturb the mounting process.

JP S52-101994 U is considered to represent the closest prior art for the subject-matter of the present invention; it discloses an electrical connector for end-to-end connection of electrical conductors, said connector comprising an inner sleeve interconnecting the two conductors and a sleeve cover that is in contact with the field control material of the outer sheath. For connecting the sleeve thermally and mechanically to the sleeve cover, screws are provided which pass through the wall of the sleeve cover.

US 2013/0056268 A1 discloses electrical connector, an insert for an electrical connector, and an electrical assembly. The electrical connector includes a conductive housing and a conductive insert positioned within the conductive housing. The conductive housing includes a configuration for receiving a conductor and being in electrical communication with the conductor through the insert.

US 3,816,640 relates to a high voltage cable splice assembly having a connecting means for joining the conductors of two electrical cables, a plurality of coaxial inner tubes bridging between the cables and including insulating portions and semiconducting portions, and a semiconducting outer tube that is coaxial with the inner tubes. The inner tubes are integrally formed with semiconductive end portions and central high dielectric strength insulating portions. The semiconducting end portions of adjacent inner tubes are interleaved to serve as extensions of the cable shielding, and the outer tube interconnects these shield extensions to complete a path of conduction between the cables.

DE 31 42 191 A1 discloses a plastic-insulated medium-voltage cable having a pushed-on connecting sleeve with a contact supporting part. Associated with this sleeve is an elastic sleeve tube which has a smoothing sheath incorporated into the tube wall which surrounds the actual conductor connecting point at a distance. The two conductors are connected by means of a compression connector. In order to create a connecting sleeve in which the space inside the sleeve between the smoothing sheath and the compression connector is adequately protected against external pressure effects, a longitudinally split contact supporting part is arranged in the space between the smoothing sheath and the compression connector.

GB 2 294 597 A relates to an electrical connector for connecting at least one conductor of a cable to the connector and to another conductor. The connector includes an open channel to receive the cable and a sleeve that is movable to enclose the cable in the channel. The sleeve can slide along the connector between channel open and closed positions, while captured to the connector by a pin and groove. Alternatively, the sleeve is resilient and longitudinally slotted, to be sprung over the channel. A bridge cover can cover the channel and meet it with different angles of contact. The conductor is held in position by shear bolts which can be staggered radially, and a second conductor can be provided into a through or blocked port in a non open part of the connector.

The object underlying the present invention is to provide an improved electrical connector for end-to-end connection, which can be mounted and sealed in a particularly easy and secure manner.

This object is solved by the subject matter of the independent claim. Advantageous embodiments of the present invention are the subject matter of several dependent claims.

The idea underlying the present invention is to form an electrical connector for end-to-end connection of electrical conductors from an electrically conductive connector bushing and a separate cover member, wherein the connector bushing is supported movably within the cover member in an assembled state. The electrically conductive connector bushing receives and mechanically fixes the electrical conductor, and the cover member at least partly encases the connector bushing. Thus, the functionality of mechanically fixing the cables no longer has an impact on the outer surface of the electrical connector and the cover member presents a perfectly smooth surface to any surrounding jacketing. By allowing the bushing to move within the cover member, any off-centered mounting of the cable with respect to an ideal longitudinal middle axis can be adjusted for. By making sure that no recesses or holes are present at the outer surface, the assembly of an elastic sheath over the connector assembly is facilitated significantly.

Furthermore, any inaccuracies of the centered position of the cables within the connector bushing can be corrected in relation to the center of an outer sheath by the movement of the connector bushing in relation to the cover member. In other words, the cable may be centered and in line with a surrounding silicone adapter even if it is not centered in respect to the electrically conductive connector bushing.

Due to this alignment, also a larger range of conductor diameters can be used with the same connector assembly.

According to an advantageous embodiment of the present invention, the cover member is supported on the connector bushing by means of at least one bearing pin, which is interacting with a corresponding bearing recess. Such a bearing pin can be designed to have a sufficient length for allowing a tilting movement of the connector bushing within the cover member. On the other hand, the pin stops any undesired movement in a longitudinal direction, i. e. along the length of the cables. This functionality may in particular be realized by a bearing pin that extends in a radial direction across to the longitudinal axis of the connector bushing.

According to the present invention, it is of no importance whether the bearing pin is arranged on the inner surface of the cover member or on the outer surface of the connector bushing. However, for the following examples and description it is always assumed that the bearing pin is arranged on the inner surface of the cover member.

According to an advantageous embodiment of the present invention, the cover member has an essentially tubular shape and is formed by at least two longitudinally separated shells. Preferably, the cover member is formed by two half shells having each a semicircular cross-section. Other shells forming the cover member are of course also within the scope of the present invention, e. g. longitudinally separated shells each having a cross section of a 120° circular arc. By forming the cover member from at least two separate parts, the assembly over the connector bushing is facilitated. However, also a single part cover member can be used according to the present invention, when designing the interaction between bearing pin and bearing recess according to the principles of a bayonet joint.

By allowing a freedom degree of the movement not only in the form of a tilting movement, but also in the form of a rotation around the longitudinal axis, the bearing recess can be formed by an elongated groove or a circular cavity that guides the pin by a predefined angle of rotation. In the case of a circular cavity that surrounds the complete outer surface of the bushing a full 360° movement is possible. Any smaller angular values can of course also be envisaged. Again, it has to be pointed out that it is of no importance whether the bearing recess is formed on the outer surface of the connector bushing or on the inner surface of the cover member.

In order to provide a means for retaining a sufficient amount of preferably conductive lubricant, the inner surface of the connector bushing can be provided with a roughened structure. Furthermore, thereby the electrical and mechanical contact towards the outer surface of the cable can be improved.

Such a roughened structure may for instance be formed by a plurality if circumferentially provided incisions forming a zig-zag-shaped longitudinal profile or by an internal screw thread.

By arranging at least one threaded aperture extending in a radial direction for accommodating fixing screws, the electrical conductors can be securely fastened within the connector bushing. According to a preferred embodiment, such screws have screw heads that will be sheared off. The screw heads will be sheared off as soon as the force applied to the screw exceeds a pre-defined threshold. Usually, at least one screw is used for each electrical conductor to be connected and according to a preferred embodiment eight screws which are arranged at different longitudinal and circumferential positions are used to secure the conductors within the connector bushing.

In order to reduce the weight and material thickness of the cover member, same can be formed in a way that protrusions define the cover member's smallest inner diameter, said protrusions being separated from each other by respective notches. Such a design has the advantage that by enlarging the surface that is close to the connector bushing, an improved heat dissipation can be achieved.

In order to provide optimized geometrical conditions for a field control by means of a surrounding elastic sheath the distal ends of the connector bushing and the cover member are flush to each other when assembled.

According to an advantageous embodiment of the present invention, the electrical connector further comprises a tubular sleeve for covering the cover member and part of the electrical conductors. This sleeve may for instance be formed from an elastic material, such as a silicone material which is either pre-expanded and recovers its original shape after mounting, or is slid over the cover member with the help of a lubricant.

The tubular sleeve surrounding the cover member advantageously comprises electrically conductive layers, such as a Faraday cage or ring deflectors as this is known in the art for handling electrical fields occurring within the joint.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a perspective view of an electrical connector according to an advantageous embodiment of the present invention;
- **FIG. 2**: is a front view of the connector according to FIG. 1;
- **FIG. 3**: is a sectional view of the connector as shown in FIG. 2;
- **FIG. 4**: is a perspective rolling view of the connector bushing;
- **FIG. 5**: is a longitudinal cut through the connector bushing;
- **FIG**. **6**: is a detail from FIG. 5;
- **FIG**. **7**: is a first side view of the bushing shown in FIG. 4;
- **FIG. 8**: is a front view of the bushing of FIG. 4;
- **FIG. 9**: is a second side view of the bushing of FIG. 4;
- **FIG. 10**: is a further side view of the bushing of FIG. 4;
- **FIG. 11**: is still a further side view of the bushing of FIG. 4;
- **FIG. 12**: is a perspective view of a first half shell being part of a cover member;
- **FIG. 13**: is a perspective view of a second half shell being part of the cover member;
- **FIG. 14**: is a top view of the first half shell of FIG 12;
- **FIG. 15**: is a sectional view of the first half shell of FIG 12;
- **FIG. 16**: is a longitudinal side view of the first half shell shown in FIG. 12;
- **FIG. 17**: is a front view of the second half shell shown in FIG 13;
- **FIG. 18**: is a longitudinal side view of the second half shell shown FIG 13;
- **FIG**. **19**: is a top view of the second half shell shown FIG 13;
- **FIG. 20**: is a perspective view of a cover member according to a further advantageous embodiment;
- **FIG. 21**: is a sectional view through an electrical connector according to a further advantageous embodiment;
- **Fig. 22**: is a sectional view of an electrical connector according to still a further advantageous embodiment.

The present invention will now be described in more detail with reference to the figures.

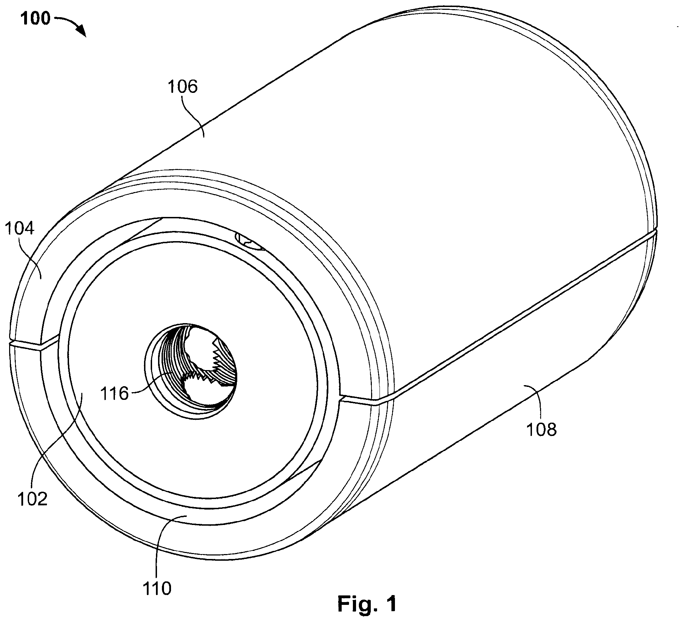

In particular, Fig. 1 shows in a perspective view an electrical connector 100 according to the present invention. This electrical connector 100 is designed for an end-to-end connection of electrical conductors, in particular, for conductors that carry current load. It has to be noted that in the drawings the respective cables are not shown for the sake of clarity.

According to the present invention, the electrical connector comprises two separate modules, an electrically conductive connector bushing 102 and a cover member 104. The connector bushing 102 is the component that is in direct mechanical and electrical contact with both electrical conductors and establishes both the mechanical fixing and the electrical contact between the two conductors. The cover member 104 forms the outer surface of the assembled electrical connector 100 which is presented for instance to the inner surface of a further elastic sheath covering the electrical connector. According to the present invention, this outer surface is absolutely smooth and does not show any screw heads or openings into which applied lubricant could disappear.

According to the embodiment shown in Fig. 1, the cover member 104 comprises a first and a second half shell 106, 108. By separating the tubular cover member 104 into two half shells which are jointed to each other in a longitudinal direction, the assembly is significantly facilitated.

According to the present invention, the outer diameter of the connector bushing 102 is sufficiently smaller than the inner diameter of the cover member 104, thus defining a clearance 110 between the bushing and the cover member. Due to this additional space, the connector bushing 102 can move within the cover member 104 in parallel to its longitudinal axis as well as in a tilting movement, whereby the longitudinal axis of the connector bushing 102 forms an angle with the longitudinal axis of the cover member 104. As will be apparent from the following figures, a movement in the longitudinal direction is essentially blocked by two bearing pins that mechanically secure the connector bushing 102 within the cover member 104.

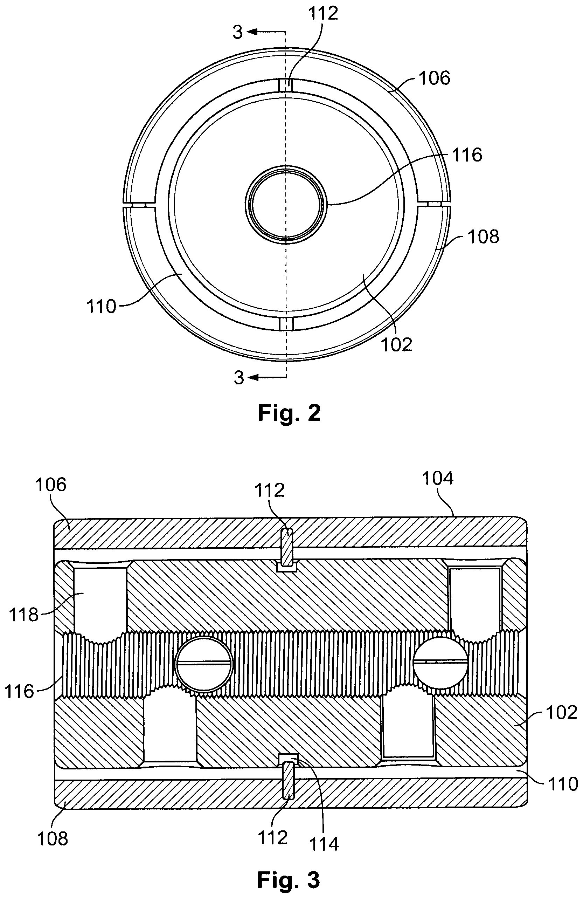

Fig. 2 shows the electrical connector 100 in a frontal view. In particular, this drawing shows two bearing pins 112 which support the connector bushing 102 within the cover member 104. As may be seen more clearly from the cross-sectional longitudinal view of Fig. 3, the bearing pins 112 engage with belonging recesses 114 which are arranged on the outer surface of the connector bushing 104.

The connector bushing 104 comprises a bore 116 that extends along its whole length for receiving the electrical conductors to be connected. According to the embodiment shown in Fig. 3, the bearing pins 112 and the belonging bearing recesses 114 are arranged in the center of the longitudinal extension and also in the center of the circumference of the each half shell 106, 108. This symmetry allows a tilting of the connector bushing around an axis extending between the two pins as well as in a direction across thereto and also hybrid forms thereof. Also a parallel movement in the direction from one of the bearing pins towards the other is possible. On the other hand, a movement that would extract the connector bushing from the surrounding cover member 104 is effectively blocked.

By means of this degree of freedom, tolerances and eccentricities of the electrical conductors within the bore 116 can be compensated.

Furthermore, as can be seen from Fig. 3, a plurality of apertures 118 is provided which extend radially towards the bore 116. These apertures serve for inserting bolts or screws that fix the electrical conductors inside the bore once they are positioned in their final position. The apertures 118 may either be threaded for receiving a screw or have a smooth surface which is cut by a screw or receives a press-fit pin. As apparent from Fig. 3, in the absence of the cover member 104, the connector bushing 102 would present at the site of the apertures recesses in its surface that would be detrimental when sliding an elastic sleeve over the connection. Due to the present invention, however, a completely smooth outer surface is presented by the outer surface of the cover member 104.

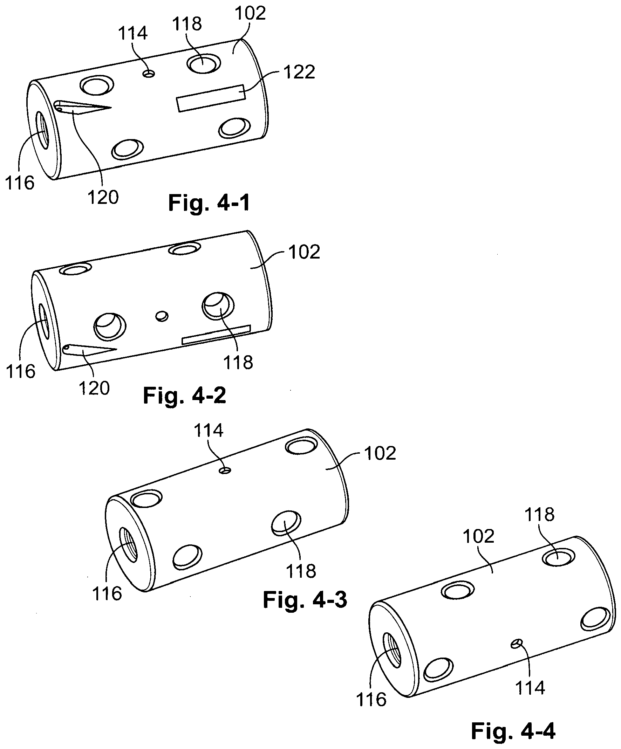

Fig. 4 shows in a perspective view the electrically conductive connector bushing in a rolling view. As can be seen from this figure, the apertures 118 are distributed around the circumference of the connector bushing 102 in a way that a particular symmetric pressure can be exerted on the two cable ends that are to be connected. Furthermore, as may be derived from Fig. 4-1 and Fig. 4-2, the connector bushing is provided with a connecting plane 120 whereto a conductive lead (not shown in the figure) can be screwed. This conductive lead is fixed with its other end to the inner surface of the cover member 104 as will be apparent from the following figures. This electrically conductive lead provides a well defined electrical contact between the connector bushing 102 and the cover member 104.

Instead of the lead also a spring contact can be used as electrical contacting means.

Furthermore, in the middle of the complete length of the connector bushing two radially opposing bearing recesses 114 are provided. It should be noted, that instead of the circular recesses shown in Fig. 4 also elongated notches or grooves can be provided and even one notch extending around the complete circumference of the connector bushing can be provided. As already mentioned above, instead of the bearing recess 114 also the bearing pins 112 could be arranged on the outside of the connector bushing with the belonging bearing recess being arranged on the inside of the cover member 104. Finally, any necessary marking or identification text can be inscribed in the marking area 122.

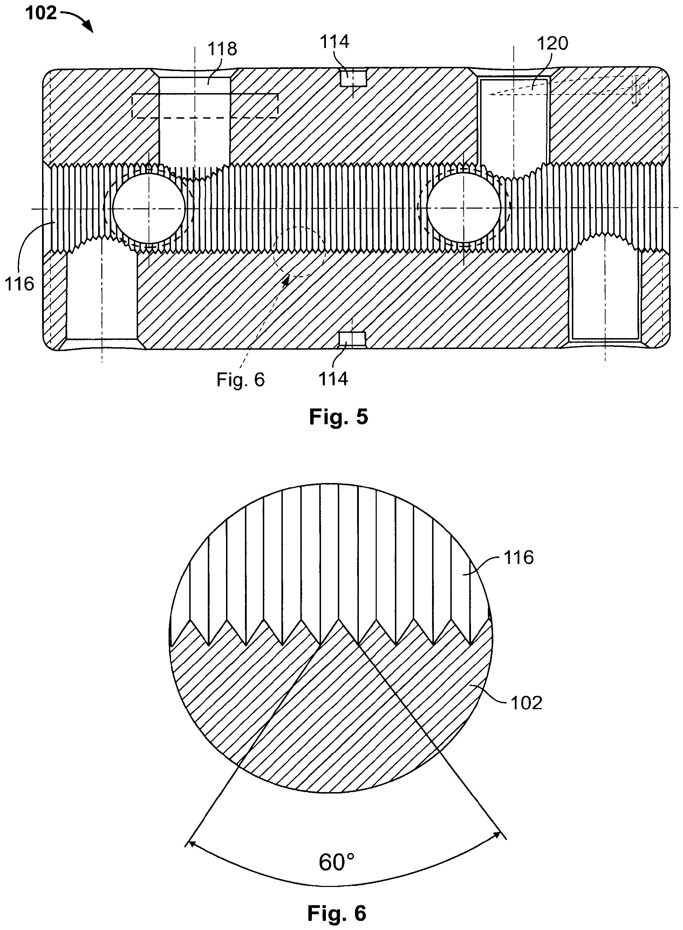

Fig. 5 shows a cross-sectional view of the connector bushing 102 wherein hidden structures are visible as broken lines. Together with Fig. 6 which is a detail from Fig. 5 this view illustrates the inner structure of the bore 116. In order to provide a roughened surface which enhances the contact surface towards the conductors to be connected and furthermore provides storage for a lubricant, the inner surface of the bore 116 is structured by a zig-zag shaped profile with 60 degree angles as shown in Fig. 6. Instead of this structure, of course also a threading with a thread lead can be provided.

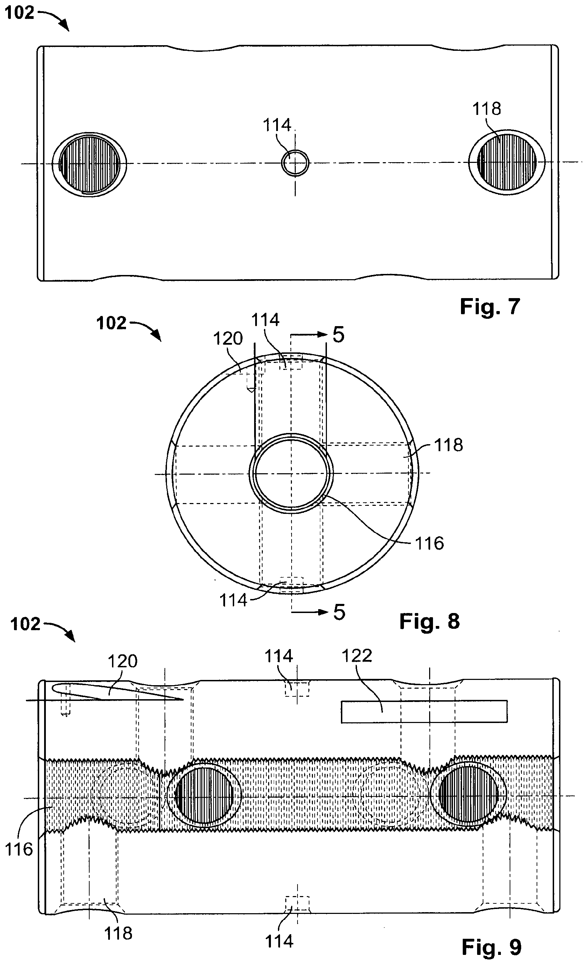

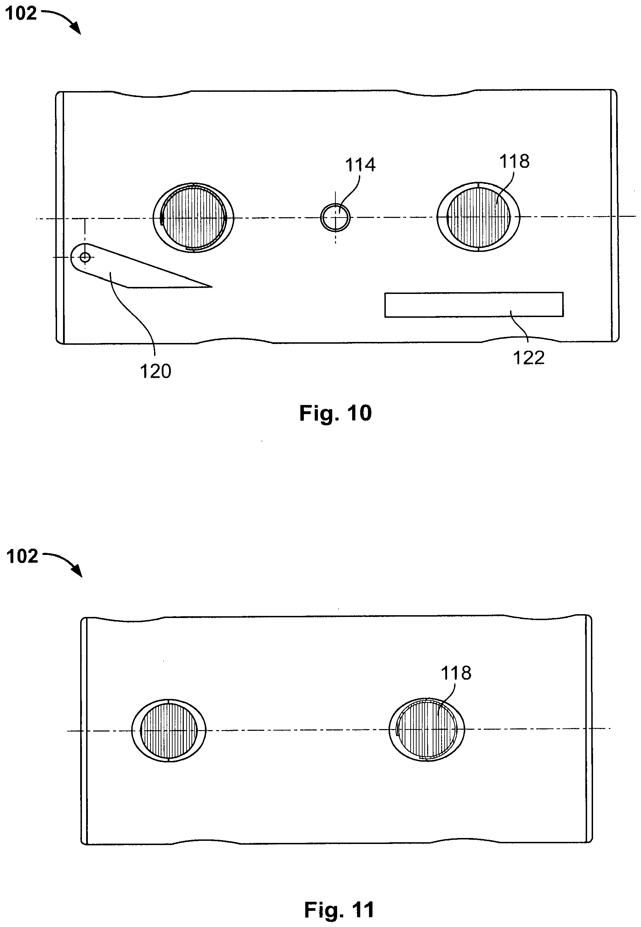

Figs. 7 to 11 give different views of the connector bushing partly with the hidden lines being visible.

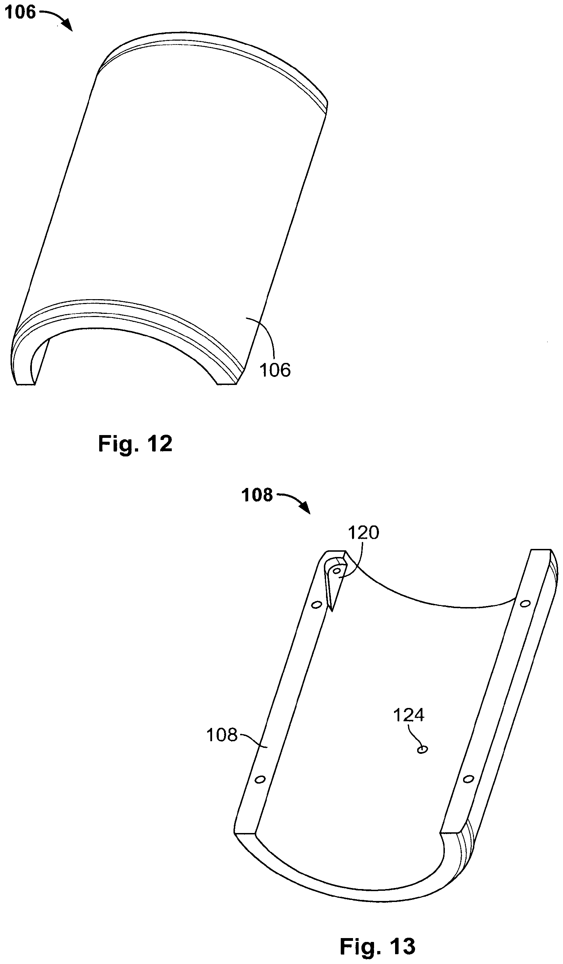

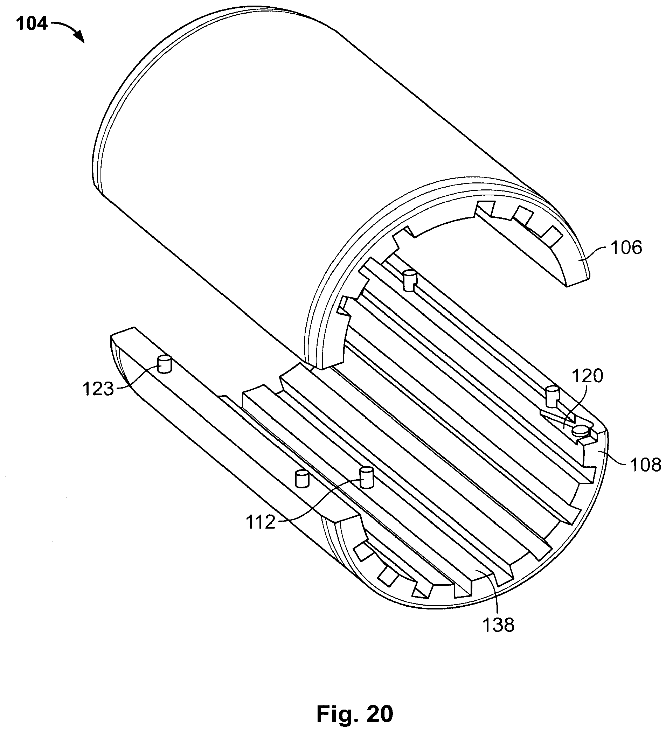

Figs. 12 and 13 show the first and second half shells 106, 108 of the cover member 104, respectively. The two half shells 106, 108 are connected to each other by means of four press-fit pins 123 (not visible in Figs.12 and 13, but shown in Fig. 20) held in respective press-fit openings 125 at the first and second half shells 106 and 108. Furthermore, the second half shell 108 provides another connecting plane 120 to which the other end of the lead that is connected to the connector bushing is screwed.

Furthermore, each half shell 106, 108 has a centrally arranged press-fit opening 124 for fixing the bearing pin 112 therein.

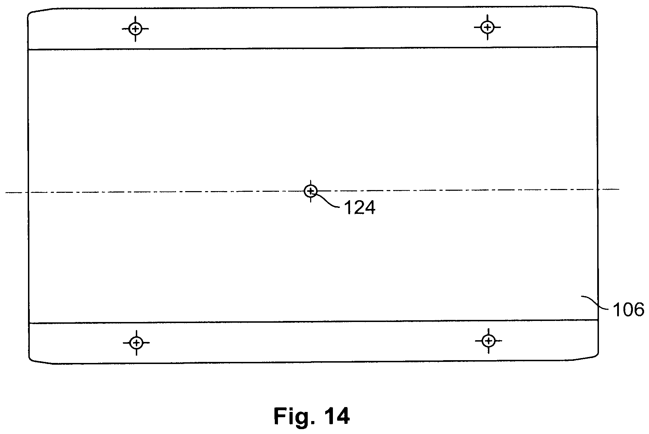

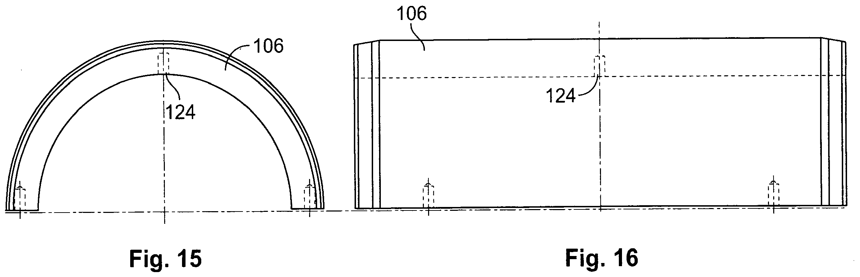

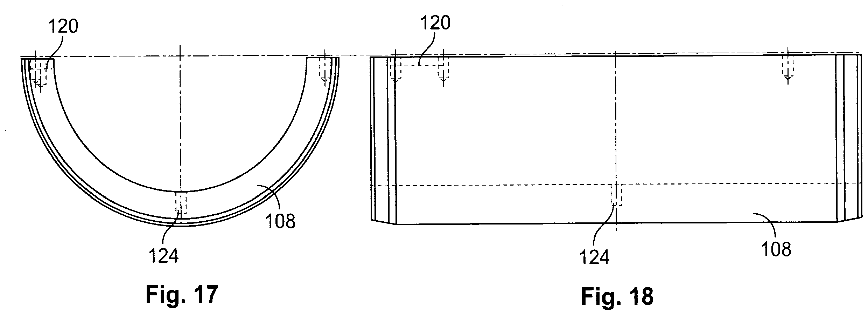

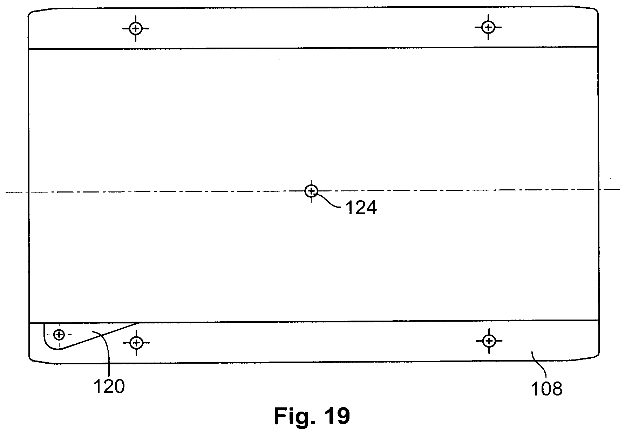

Figs. 14 to 16 show further views of the first half shell 106, whereas Figs. 17 to 19 show further views of the second half shell 108.

Fig. 20 illustrates a further advantageous embodiment of the cover member 104 according to the present invention. According to this embodiment, the inner surface of each of the first and second half shells 106, 108 of the cover member 104 is structured to comprise longitudinal rib-shaped protrusions 138. The rib-shaped protrusions 138 enhance the area of the inner surface of the cover member 104 so that a better heat dissipation to the outside of the connection can be achieved. For a person skilled in the art it is apparent that other cross-sectional structures which enhance the heat dissipating surface area can of course also be chosen.

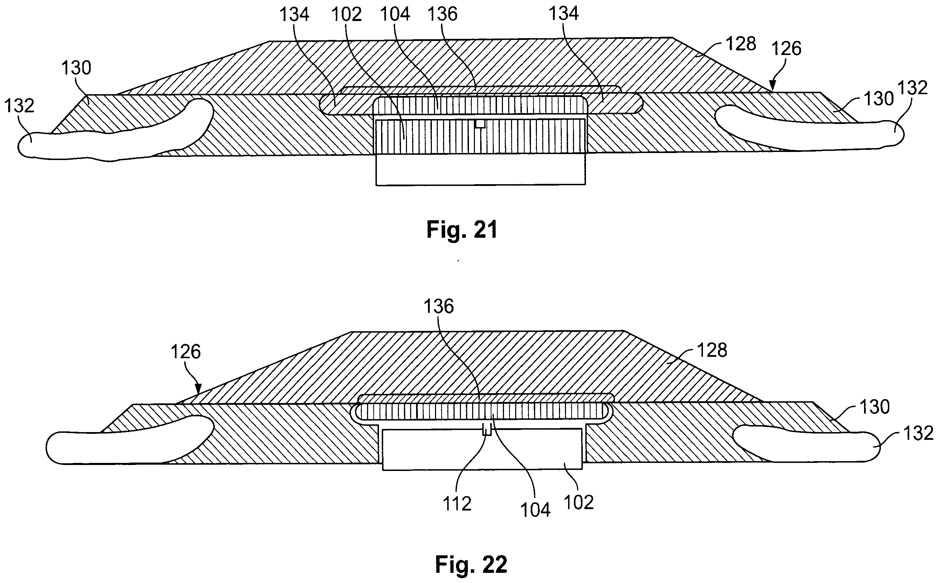

Fig. 21 illustrates the electrical connector according to the present invention in a fully assembled state and covered with an elastic sleeve 126. The elastic sleeve 126 has a main body 128 which covers a so-called adaptor 130. The adapter part of the elastic sleeve 126 comprises deflector elements 132 which are in contact with the outer sheath of the cables to be connected. Furthermore, close to the cover member 104, ring deflector elements 134 are arranged. The complete outside surface of the connector bushing 102 and the cover member 104 is surrounded by a Faraday cage 136 provided in the main body 128. By providing an absolutely smooth surface on the outside of the cover member 104 any damaging of the elastic sleeve 126 during assembly can be avoided and, furthermore, no irregularities which lead to electrical field peaks are present.

An alternative embodiment of the electrical connector is shown in Fig. 22. Here the cover member 104 is formed to be longer than the connector bushing 102. Therefore, the ring deflectors 134 are no longer necessary. All other components correspond to those explained with respect to the previous figures.

Further improvements of the electrical connector according to the present invention may be envisaged. For instance, as already mentioned, the cover member 104 may be provided with grooves on its inside to provide a better thermal performance between the connector bushing and the cover member. Furthermore, the first and second half shells of the cover member may additionally be closed and locked by using a latching spring inside the pins that connect the two half shells to each other.

In the following, the assembly of the electrical connector according to the present invention will be described in detail referring to all the Figs. 1 to 22.

In a first step, the connector bushing 102 is provided. It is fabricated for instance from aluminum. The conductors which are to be connected are stripped from any insulating material covering their electrical conductive cores and are inserted from both sides into the bore 116. Essentially, the cables are inserted until they meet in the middle of the connector bushing 102. In a next step, screw bolts are inserted and tightened until the screw heads are sheared off.

Further, the first and second half shells 106, 108 of the cover member 104 are fabricated, for instance also from an electrically conductive material such as aluminum. Both of the half shells 106, 108 are provided with one bearing pin 112 each.

Now the second half shell 108 is positioned to receive the connector bushing 102 in a way that the bearing pin 112 interacts with the bushing's bearing recess 114. In this position both connecting planes 120 are accessible and an electric lead is screwed with one end to the second half shell 108 and with its other end to the connector bushing 102.

In a next step, the first half shell 106 of the cover member 104 is mounted in a way that its connecting pins 123 engage with the press-fit openings 125 provided at the second half shell 108. The two half shells 106, 108 are firstly fixed to each other by a press-fit of the fixing pins and secondly are held together by sliding an elastic sleeve over the electrically conductive parts of the electrical connector.

According to the present invention, the outer surface of the cover members is absolutely smooth and thereby a facilitated assembly of the elastic sleeve can be achieved. The electrically conductive connector bushing 102, on the other hand, stays movable to a certain extent, thereby compensating an off-centered position of the electrical conductors with respect to the surrounding elastic sleeve 126.

**Reference Numerals:**

| **Reference Numeral** | **Description** |
|---|---|
| 100 | electrical connector |
| 102 | connector bushing |
| 104 | cover member |
| 106 | first half shell of cover member |
| 108 | second half shell of cover member |
| 110 | clearance |
| 112 | bearing pins |
| 114 | bearing recess |
| 116 | bore |
| 118 | aperture |
| 120 | connecting plane |
| 122 | marking area |
| 123 | connecting pins |
| 124 | press-fit opening for bearing pin |
| 125 | press-fit opening for connecting pin between half shells |
| 126 | elastic sleeve |
| 128 | main body |
| 130 | adapter |
| 132 | deflector element |
| 134 | ring deflector element |
| 136 | Faraday cage |
| 138 | rib-shaped protrusions |

## Claims

1. Electrical connector for end-to-end connection of electrical conductors, said connector (100) comprising:
an electrically conductive connector bushing (102) for receiving and mechanically fixing said electrical conductors, and
a cover member (104) for at least partly encasing said connector bushing (102), the cover member (104) having a smooth outer surface with no recesses or holes,
wherein an outer diameter of the connector bushing (102) is smaller than an inner diameter of the cover member (104), so that a clearance (110) is formed between the connector bushing (102) and the cover member (104), and
wherein said cover member (104) is supported on said connector bushing (102) by means of at least one bearing pin (112) arranged on the inner surface of the cover member (104) or on the outer surface of the connector bushing (102) which is interacting with a corresponding bearing recess (114), so that said connector bushing (102) is supported movably within said cover member (104) when the cover member is assembled over the connector bushing (102).

2. Electrical connector according to claim 1, wherein said cover member (104) has an essentially tubular shape, formed by at least two longitudinally separated shells (106, 108).

3. Electrical connector according to claim 1 or 2, wherein said at least one bearing pin (112) extends in a radial direction with respect to a longitudinal axis of the connector (100).

4. Electrical connector according to one of the claims 1 to 3, wherein said at least one bearing pin (112) is arranged on an inner surface of said cover member (104).

5. Electrical connector according to one of the claims 1 to 4, wherein said at least one bearing recess (114) is formed by a circular cavity or an elongated groove having inner cross section dimensions larger than an outer cross section of the corresponding bearing pin (112).

6. Electrical connector according to one of the preceding claims, wherein said connector bushing (102) has an inner surface provided with a roughened structure for enhancing the contact surface towards the conductors to be connected.

7. Electrical connector according claim 6, wherein said roughened structure is formed by a plurality of circumferential incisions forming a zigzag shaped longitudinal profile, or by an internal screw thread.

8. Electrical connector according to one of the preceding claims, wherein said connector bushing (102) comprises at least one threaded aperture (118) extending in a radial direction for accommodating fixing screws that fix the electrical conductors within said connector bushing (102).

9. Electrical connector according to one of the preceding claims, wherein an inner surface of said cover member (104) is provided with at least one protrusion that defines a smallest inner cross sectional diameter of the cover member.

10. Electrical connector according to claim 9, wherein said inner surface of said cover member (104) is provided with a plurality of ribs extending in a longitudinal direction of the connector for defining a smallest inner cross sectional diameter of the cover member.

11. Electrical connector according to one of the preceding claims, wherein distal ends of said connector bushing (102) and said cover member (104) are flush to each other in the assembled state.

12. Electrical connector according to one of the preceding claims, further comprising a tubular sleeve (126) for covering said cover member and a part of said electrical conductors, wherein said sleeve comprises at least one electrically insulating layer and at least one electrically conductive layer (134, 136) embedded in said electrically insulating layer.

13. Electrical connector according to claim 12, wherein said at least one electrically conductive layer comprises a ring-shaped Faraday cage (136) which surrounds said cover member in the assembled state.

14. Electrical connector according to claim 12 or 13, wherein said at least one electrically conductive layer comprises at least one ring deflector (134) which is arranged in a region adjacent to a distal end of said cover member.

## Patentansprüche

1. Elektrischer Verbinder für eine Ende-zu-Ende-Verbindung von elektrischen Leitern, wobei der Verbinder (100) aufweist:
eine elektrisch leitende Verbinderbuchse (102) zur Aufnahme und mechanischen Fixierung der elektrischen Leiter, und
ein Abdeckungselement (104), das ausgebildet ist, die Verbinderbuchse (102) zumindest teilweise zu umschließen, wobei das Abdeckelement (104) eine glatte Außenfläche ohne Vertiefungen oder Löcher hat,
wobei ein Außendurchmesser der Verbinderbuchse (102) kleiner ist als ein Innendurchmesser des Abdeckungselements (104) derart, dass ein Spalt (110) zwischen der Verbinderbuchse (102) und dem Abdeckungselement (104) gebildet ist, und
wobei das Abdeckungselement (104) auf der Verbinderbuchse (102) mittels mindestens eines Lagerstifts (112) gehalten wird, der auf der Innenfläche des Abdeckungselements (104) oder auf der Außenfläche der Verbinderbuchse (102) angeordnet ist und der mit einer entsprechenden Lagervertiefung (114) derart interagiert, dass die Verbinderbuchse (102) innerhalb des Abdeckungselements (104) beweglich gehalten wird, wenn das Abdeckungselement über der Verbinderbuchse (102) montiert ist.

2. Elektrischer Verbinder nach Anspruch 1, wobei das Abdeckungselement (104) eine im Wesentlichen rohrförmige Gestalt hat, die durch mindestens zwei in Längsrichtung getrennte Schalen (106, 108) gebildet ist.

3. Elektrischer Verbinder nach Anspruch 1 oder 2, wobei der mindestens eine Lagerstift (112) in Bezug auf eine Längsachse des Verbinders (100) in radialer Richtung verläuft.

4. Elektrischer Verbinder nach einem der Ansprüche 1 bis 3, wobei der mindestens eine Lagerstift (112) auf einer Innenfläche des Abdeckungselements (104) angeordnet ist.

5. Elektrischer Verbinder nach einem der Ansprüche 1 bis 4, wobei die mindestens eine Lagervertiefung (114) durch eine runde Aussparung oder eine gestreckte Nut mit Innenquerschnittsabmessungen, die größer sind als ein Außenquerschnitt des entsprechenden Lagerstifts (112), gebildet ist.

6. Elektrischer Verbinder nach einem der vorhergehenden Ansprüche, wobei die Verbinderbuchse (102) eine Innenfläche hat, die mit einer aufgerauten Struktur zur Vergrößerung der Kontaktfläche zu den anzuschließenden Leitern versehen ist.

7. Elektrischer Verbinder nach Anspruch 6, wobei die aufgeraute Struktur durch mehrere Umfangseinschnitte, die ein zickzack-förmiges Längsprofil bilden, oder durch ein Innenschraubengewinde gebildet ist.

8. Elektrischer Verbinder nach einem der vorhergehenden Ansprüche, wobei die Verbinderbuchse (102) mindestens eine Gewindeöffnung (118) aufweist, die sich in einer radialen Richtung zur Aufnahme von Befestigungsschrauben erstreckt, die die elektrischen Leiter in der Verbinderbuchse (102) fixieren.

9. Elektrischer Verbinder nach einem der vorhergehenden Ansprüche, wobei eine Innenfläche des Abdeckungselements (104) mit mindestens einem Vorsprung versehen ist, der einen kleinsten Innenquerschnittsdurchmesser des Abdeckungselements festlegt.

10. Elektrischer Verbinder nach Anspruch 9, wobei die Innenfläche des Abdeckungselements (104) mit mehreren Rippen versehen ist, die sich in einer Längsrichtung des Verbinders so erstrecken, dass sie einen kleinsten Innenquerschnittsdurchmesser des Abdeckungselements festlegen.

11. Elektrischer Verbinder nach einem der vorhergehenden Ansprüche, wobei distale Enden der Verbinderbuchse (102) und des Abdeckungselements (104) im montierten Zustand zueinander bündig sind.

12. Elektrischer Verbinder nach einem der vorhergehenden Ansprüche, der ferner eine rohrförmige Hülse (126) aufweist, die das Abdeckungselement und einen Teil der elektrischen Leiter abdeckt, wobei die Hülse mindestens eine elektrisch isolierende Schicht und mindestens eine elektrisch leitende Schicht (134, 136), die in der elektrischen isolierenden Schicht eingebettet ist, aufweist.

13. Elektrischer Verbinder nach Anspruch 12, wobei die mindestens eine elektrisch leitende Schicht einen ringförmigen Faraday-Käfig (136) aufweist, der das Abdeckungselement im montierten Zustand umgibt.

14. Elektrischer Verbinder nach Anspruch 12 oder 13, wobei die mindestens eine elektrisch leitende Schicht mindestens ein Ringablenkelement (134) aufweist, das in einem Gebiet benachbart zu einem distalen Ende des Abdeckungselements angeordnet ist.

## Revendications

1. Connecteur électrique pour le raccordement bout à bout de conducteurs électriques, ledit connecteur (100) comprenant :
une douille de connecteur (102) électriquement conductrice destinée à recevoir et à fixer mécaniquement lesdits conducteurs électriques, et
un élément de couverture (104) destiné à enfermer au moins partiellement ladite douille de connecteur (102), l'élément de couverture (104) ayant une surface extérieure lisse dépourvue de creux ou de trous,
dans lequel un diamètre extérieur de la douille de connecteur (102) est inférieur à un diamètre intérieur de l'élément de couverture (104), de sorte qu'un jeu (110) est formé entre la douille de connecteur (102) et l'élément de couverture (104), et
dans lequel ledit élément de couverture (104) est supporté sur ladite douille de connecteur (102) grâce à au moins une cheville d'appui (112) située sur la surface intérieure de l'élément de couverture (104) ou sur la surface extérieure de la douille de connecteur (102), qui interagit avec un creux d'appui (114) correspondant, de sorte que ladite douille de connecteur (102) est supportée de manière mobile à l'intérieur dudit élément de couverture (104) lorsque l'élément de couverture est assemblé sur la douille de connecteur (102).

2. Connecteur électrique selon la revendication 1, dans lequel ledit élément de couverture (104) a une forme essentiellement tubulaire, formée d'au moins deux coques (106, 108) séparées dans le sens longitudinal.

3. Connecteur électrique selon la revendication 1 ou 2, dans lequel ladite au moins une cheville d'appui (112) s'étend dans une direction radiale par rapport à un axe longitudinal du connecteur (100).

4. Connecteur électrique selon l'une des revendications 1 à 3, dans lequel ladite au moins une cheville d'appui (112) est située sur une surface intérieure dudit élément de couverture (104).

5. Connecteur électrique selon l'une des revendications 1 à 4, dans lequel ledit au moins un creux d'appui (114) est formé par une cavité circulaire ou une rainure allongée ayant une section transversale intérieure de plus grandes dimensions qu'une section transversale extérieure de la cheville d'appui (112) correspondante.

6. Connecteur électrique selon l'une des revendications précédentes, dans lequel ladite douille de connecteur (102) a une surface intérieure qui est pourvue d'une structure rendue rugueuse pour améliorer la surface de contact vis-à-vis des conducteurs à raccorder.

7. Connecteur électrique selon la revendication 6, dans lequel ladite structure rendue rugueuse est formée par une pluralité d'incisions circonférentielles formant un profil longitudinal en zigzag ou par un filetage interne.

8. Connecteur électrique selon l'une des revendications précédentes, dans lequel ladite douille de connecteur (102) comprend au moins une ouverture filetée (118) s'étendant dans une direction radiale, destinée à recevoir des vis de fixation qui fixent les conducteurs électriques à l'intérieur de ladite douille de connecteur (102).

9. Connecteur électrique selon l'une des revendications précédentes, dans lequel une surface intérieure dudit élément de couverture (104) est pourvue d'au moins une saillie qui définit un plus petit diamètre de section transversale intérieure de l'élément de couverture.

10. Connecteur électrique selon la revendication 9, dans lequel ladite surface intérieure dudit élément de couverture (104) est pourvue d'une pluralité de nervures s'étendant dans une direction longitudinale du connecteur pour définir un plus petit diamètre de section transversale intérieure de l'élément de couverture.

11. Connecteur électrique selon l'une des revendications précédentes, dans lequel les extrémités distales de ladite douille de connecteur (102) et dudit élément de couverture (104) sont alignées à fleur l'une de l'autre à l'état assemblé.

12. Connecteur électrique selon l'une des revendications précédentes, comprenant, en outre, un manchon tubulaire (126) destiné à couvrir ledit élément de couverture et une partie desdits conducteurs électriques, dans lequel ledit manchon comprend au moins une couche électriquement isolante et au moins une couche électriquement conductrice (134, 136) noyée dans ladite couche électriquement isolante.

13. Connecteur électrique selon la revendication 12, dans lequel ladite au moins une couche électriquement conductrice comprend une cage de Faraday annulaire (136) qui entoure ledit élément de couverture à l'état assemblé.

14. Connecteur électrique selon la revendication 12 ou 13, dans lequel ladite au moins une couche électriquement conductrice comprend au moins un déflecteur annulaire (134) qui est situé dans une zone adjacente à une extrémité distale dudit élément de couverture.
